# EUROPEAN PATENT APPLICATION

(11) **EP 0 823 694 A1**
(43) Date of publication of application: **11.02.1998**
(21) Application number: 96202240.6
(22) Date of filing: 09.08.1996
(51) Int. Cl.: G07F 7/08, G07B 15/00

(54) **Tickets stored in smart cards**

(71) Applicant: Koninklijke PTT Nederland N.V., 9726 AE Groningen (NL)
(72) Inventor: Drupsteen, Michiel Marco Paul, c/o KPN Research, 2264 XZ Leidschendam (NL); Muller, Frank, c/o KPN Research, 2264 XZ Leidschendam (NL)
(74) Representative: Beitsma, Gerhard Romano

(57) **Abstract**

The invention relates to tickets on smart cards. According to the invention, tickets (20) comprise several fields: an entitlement field (21), a validation field (22), and preferably also a verification field (23). Data may be written into the said fields (21, 22, 23) in a protected manner using a different key (K1, K2, K3) for each type of field. A further protection of the integrity of the tickets is obtained by using a first storage command (UPDATE) to prepare a field when issuing the ticket and using a different, second storage command (WRITE) when validating the ticket. Preferably, in the tickets a code is used having a fixed number of set bits, thus preventing the fraudulent modification of an issued ticket.

## Description

### BACKGROUND OF THE INVENTION

The present invention relates to tickets stored in smart cards, as well as to smart cards for storing tickets and a method of using tickets stored on smart cards. In particular, the present invention relates to "open" tickets on smart cards, i.e tickets of which the particular date and/or time of use is left open when issuing the ticket. More in particular, the present invention relates to the secure storing, validating and verifying of tickets stored on smart cards, and to smart cards and a payment system arranged for the same.

Present day smart cards offer a plurality of applications, one of which may be an electronic purse. Other possible applications are identification (user verification), storing important data (e.g. medical data), collecting loyalty credits, and the like. One such application is the storing of tickets, i.e. access rights to goods and/or services.

Various types of tickets may be envisaged. A first type of ticket may be issued containing all relevant data, such as (in the case of e.g. an airline ticket) the company (airline) involved, the price, the day of travel, the place and time of departure and the place and time of arrival. Such a ticket may be ready for use. A second type of ticket is not ready for use, as e.g. the day of travel needs to be filled in after the issuance of the ticket. Such an "open" ticket needs to be validated before it can be used: the ticket is made valid by filling in the day of travel and possibly other data. Such an "open" ticket may be suitable for multiple use if it can be validated more than once.

Dutch patent application NL 93 01902 discloses a method of obtaining a right to a service by means of a smart card (IC card). In this Prior Art method, the card serves both as a payment means and as a registration means. That is, the card is used to store proof of payment of the service paid for, thus replacing paper tickets. The use of multiple tickets, i.e. tickets which may be used more than once, is also mentioned in said patent application.

In the method of the above-mentioned patent application, a ticket is stored on a card by registering on the card an access code, optionally in combination with a card identification code. At the terminal of e.g. a theatre the access code and (optionally) the identification code are checked, whereupon the access code is erased from the card. The way multiple tickets are implemented or used is not disclosed.

The above-mentioned patent application therefore does not provide a specific method for securely storing tickets on smart cards, and certainly not for tickets which may be validated after their issuance.

European Patent Application EP 0 658 862 discloses a method and system for employing multi-functional smart cards by means of a communication system. This prior art method and system allow e.g. airline tickets to be stored on the smart cards. The specific manner in which the tickets are stored is however not disclosed.

### SUMMARY OF THE INVENTION

It is an object of the present invention to overcome the above-mentioned and other disadvantages of the prior art and to provide a smart card which allows the use of open tickets, i.e. tickets which have a non-predetermined validity date or time.

It is another object of the present invention to provide a smart card which allows "punching", i.e. traceable verification, of tickets.

It is a further object of the present invention to provide a smart card which allows tickets to be securely stored.

It is a still further object of the present invention to provide a smart card which virtually eliminates the possibility of fraudulent issuing or validation of tickets.

It is a yet further object of the present invention to provide a method for storing open tickets on smart cards, as well as a system in which the method is applied.

Accordingly, a smart card comprising an integrated circuit having a processor and a memory, the memory being structured so as to comprise tickets, a ticket comprising an entitlement field for storing data relating to the entitlement of the ticket, is according to the present invention characterized in that a ticket further comprises a validation field for storing data relating to the validity of the ticket.

By providing separate entitlement and validation fields it is possible to issue a ticket in two stages: first the ticket is issued by a first terminal, while e.g. the date of validity is left open, and at a later stage the ticket is validated by a second terminal, e.g. by registering the date of validity in the validation field.

Preferably, a ticket according to the invention further comprises at least one verification field for storing verification data. A verification field offers the opportunity to register verification information, which may be issued by a third terminal.

Although the said first, second and third terminals may be separate devices, in some applications they will be identical.

Advantageously, data in the entitlement field and in the validation field are stored using a code containing a fixed number of set bits. In this way, it can be easily verified (by the checking of the number of set bits of the code) if the data are correct, whereby fraud is effectively prevented. Preferably, the code comprises code words having eight bits, the number of set bits in each code word equalling four.

In this respect, the integrated circuit of the smart card is advantageously arranged for, when issuing the ticket, exclusively storing data in the validation field using a first command only capable of storing a first value (e.g. logical zero), and for, when validating the ticket, exclusively storing data in the validation field using a second command only capable of storing a second, different value (e.g. logical one). In this way, it is impossible to alter the entitlement during the validation or verification, or to alter the validation during verification.

### BRIEF DESCRIPTION OF THE DRAWINGS

Fig. 1 schematically shows a smart card as may be used in the method of the present invention.

Fig. 2 schematically shows the integrated circuit of the smart card of Fig. 1.

Fig. 3 schematically shows the structure of a ticket as stored in a smart card.

Fig. 4 schematically shows the way a validation field of a ticket may be coded.

Fig. 5 schematically shows a diagram representing the issuance of a ticket according to the present invention.

Fig. 6 schematically shows a diagram representing the validation of a ticket according to the present invention.

Fig. 7 schematically shows a diagram representing the verification of a ticket according to the present invention.

Fig. 8 schematically shows a system in which the method of the present invention is utilized.

### DESCRIPTION OF PREFERRED EMBODIMENTS

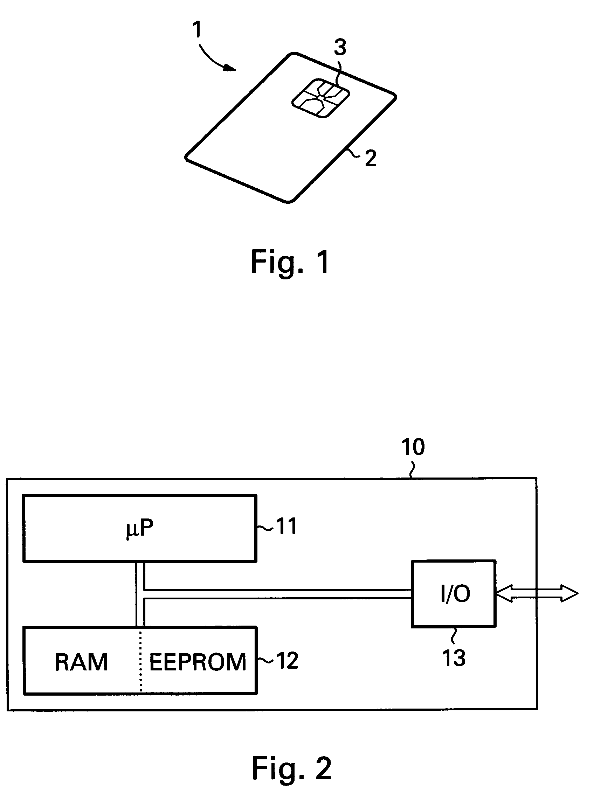

The smart card or IC card 1 shown schematically and by way of example in Fig. 1 comprises a substrate 2, in which an integrated circuit is embedded. The integrated circuit, which will further be explained with reference to Fig. 2, is provided with contacts 3 for contacting a card reader or the like. It should be noted that the present invention can also be applied in the case of so-called contactless smart cards.

The integrated circuit 10 shown schematically and by way of example in Fig. 2 comprises a processor 11, a memory 12 and an input/output circuit 13. The memory may comprise a volatile (RAM) memory part for temporarily storing data and a non-volatile (ROM) memory part for permanently or semi-permanently storing data. The latter part is preferably an EEPROM type memory. The data stored in the non-volatile part may contain both programming data (instructions, programs) and payment data, i.e. data relating to monetary transactions. It will be understood that a separate memory (not shown) may be provided to store the instruction set of the processor 11.

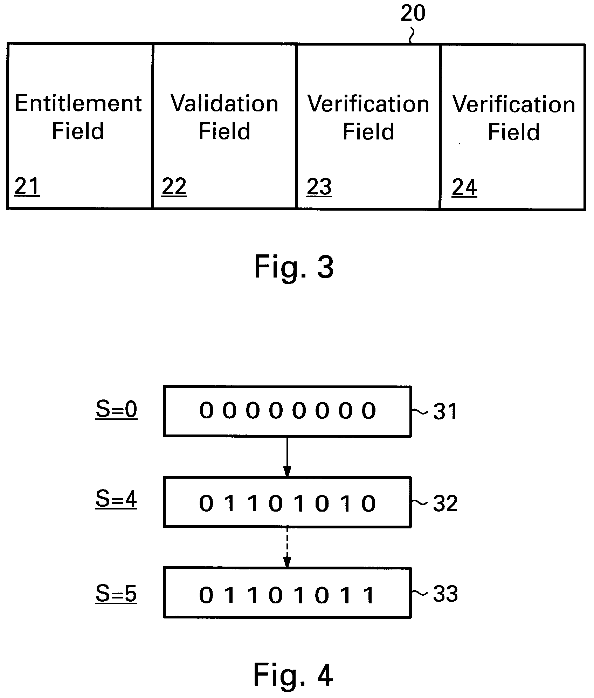

A preferred embodiment of a ticket according to the present invention is schematically shown in Fig. 3. The ticket 20 comprises several fields, i.e. an entitlement field 21, a validation field 22, and two verification fields 23 and 24. In practice, a ticket may comprise additional fields which are not shown in Fig. 3. Also, a ticket according to the present invention may comprise only one verification field, or more than two verification fields, e.g. three, five or ten.

It will be understood that the ticket 20 may be implemented by assigning memory locations of the memory 12 to the respective fields, and that in actual implementations the memory locations need not be adjacent.

The entitlement field 21 contains the description of the ticket including e.g. the identity of the ticket issuer, the scope of validity (e.g. an expiry date, the maximum length of a trip), the number of persons the ticket is valid for, and a starting point and destination of a trip, although some of these data may be entered in the validation field after the issuance of the ticket. The entitlement field 21 may comprise e.g. 25 bytes.

The validation field 22 is reserved for information which may be added later to the ticket, such as a starting time and/or date of validity. The entitlement field 21 and the validation field 22 taken together should contain sufficient data for the ticket to be valid while the actual relative allocation of data to these two fields may vary. The validation field 22 may comprise e.g. 12 bytes.

The verification fields 23 and 24 are reserved for information which may be added during the use of the ticket, such as the date, the time, and a terminal identification. A code identifying a particular means of transportation (e.g. a train code) may also be added. The verification fields 23 and 24 may comprise e.g. 22 bytes each.

The validation field 22 thus makes it possible to issue an "open" ticket which is completed at a later point in time. At the moment of issuance, only the essential data may be entered in the entitlement field 21. At the moment of validation, the ticket is completed by entering the remaining data (such as a date of validity) in the validation field 22. The verification fields 23 and 24 allow a proof of verification to be entered in the ticket (verification stamp). Such a proof of verification may provide proof of use of the ticket, proof of presence of the card (holder) at a certain location and at a certain point in time, etc.

In order to provide a secure storage and to virtually eliminate the possibility of fraudulent alteration of tickets, data are advantageously stored in the fields of a ticket using one or more of the following protective measures:
a. using a special code to store data,
b. using different commands to store data, depending on the particular stage of providing a ticket (issuance, verification or validation),
c. using different keys to store data in different fields, depending on the particular stage.
The special code will first be explained with reference to Fig. 4.

Fig. 4 shows an example of a preferred representation of data in the fields 21-24 of the ticket 20 of Fig. 3. Data word 31 comprises eight bits, all of which are (logical) zero. Accordingly, the sum S of the bits is zero. Data word 32 also comprises eight bits, four of which are (logical) one (a so-called eight over four code). The sum S of the bits accordingly equals four. In the tickets of the invention, the data in the fields 21-24 are preferably stored using a code in which a fixed number of bits equals one. In other words, a code is used as e.g. contained in data word 32, of which the sum of the bits is fixed (e.g. S = 4). This allows an easy detection of alterations of the stored data. Data word 33, for example, is equal to data word 32 exept for one bit. The sum (S) of the bits of data word 33 equals five rather than four. If a code is used in which all data words have a sum S equal to four, the aberration in data word 33 can readily be detected by determining the sum of the bits of each data word.

Accordingly, in the example of Fig. 4 three types of data words may be distinguished, based on the sum S of their bits. For a first type S, equals zero: these words are empty. For a second type, S equals four: these words contain valid data. For a second type, S equals neither zero nor four: these words contain invalid data.

It should be noted that the number of ones and zeros shown in Fig. 4 are by way of example only and that data words may be used which e.g. contain eight or ten bits, three or five of which are equal to one.

Advantageously, use is made of different commands to store data at different stages of providing a ticket. A smart card preferably supports a first write command (called UPDATE) to store ones and zeros in a memory location, and a second write command (called WRITE) to store only ones. During the issuing stage of providing a ticket, the fields of the ticket are provided with data using the first command (UPDATE). In this stage, in the entitlement field 21 relevant data are stored, while in the validation field 22 and the verification fields 23 and 24 zero-only words are written (as data word 31 in Fig. 4). During the validation and verification stages, only the second command (WRITE) may be used, and therefore only ones can be written. This means that the valid code words which have already been written cannot be altered during the validation and verification stages, as this would require a zero to be written. Thus, by allowing only the second command (WRITE) to be used during validation and verification, the tampering of ticket data is prevented.

It should be noted that an empty (i.e. non-issued) ticket should contain invalid data, i.e. data containing more than four ones per word if an eight over four code is used, in order to prevent an empty ticket to be "issued" using the second write command (WRITE). Advantageously, an empty ticket contains only ones.

In order to provide a further protection, preferably different keys are used to store data in different fields, depending on the particular stage of providing a ticket. Thus the issuance of a ticket (use of the first write command UPDATE) requires a first key K1, the validation requires a second key K2, and the verification requires a third key K3. A smart card according to the present invention is preferably arranged so as to provide access to all fields 21-24 of a ticket 20 when the first key K1 is used, while only providing write access to the validation field 22 when the second key K2 is used. Similarly, the third key K3 only provides store access to the verification fields 23 and 24. Optionally, the third key K3 only provides store access to the first verification field 23, while a fourth key K4 exclusively provides write access to the second verification field 24. It will be understood that all keys provide read access to all fields of the ticket 20.

The use of at least three keys thus makes it possible to provide limited access to the various fields and to restrict the use of the first write command (UPDATE) by requiring the key K1.

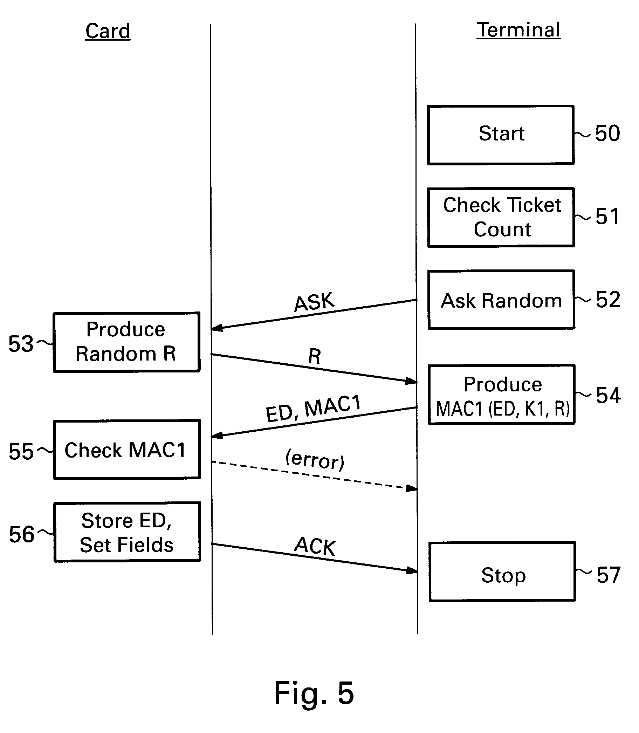

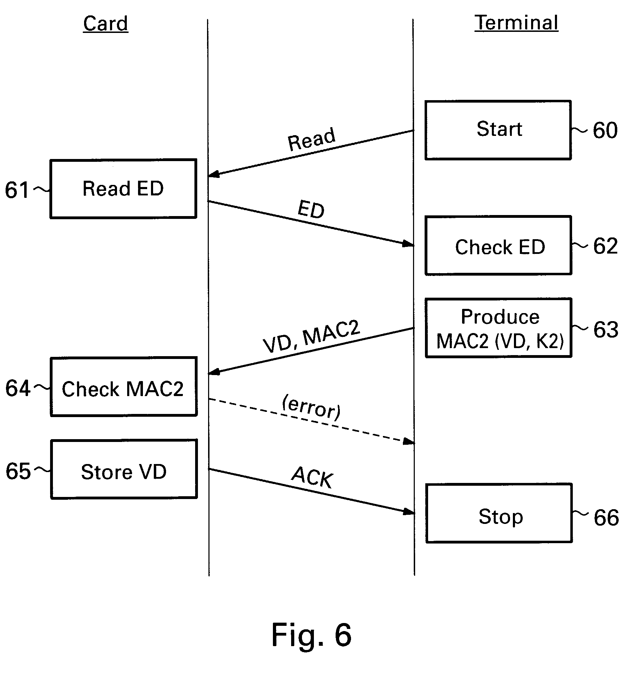

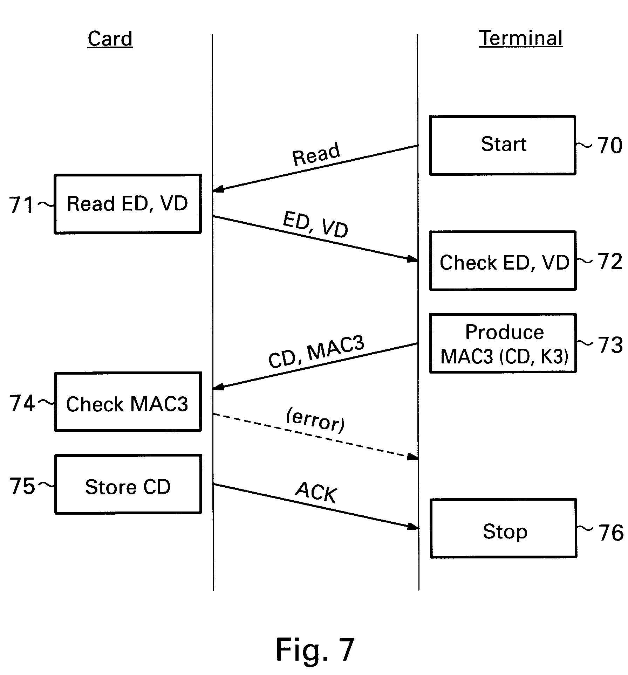

The method of the invention, as depicted schematically and by way of example in Figs. 5, 6 and 7, involves providing a ticket according to the present invention. The method comprises three stages: a first stage (issuance) shown in Fig. 5, a second stage (validation) shown in Fig. 6 and a third stage (verification) shown in Fig. 7. Subsequent events are shown from top to bottom in Figs. 5-7. It will be assumed that the memory of the smart card is initialized beforehand, e.g. by providing empty tickets containing all-ones code words.

As shown in Fig. 5, the issuance stage begins with a first (start) step 50 in which the issuing terminal is activated, e.g. by the insertion of the card. In the subsequent step 51 the ticket count is checked, i.e. is the terminal permitted to issue another ticket? The ticket count may be limited by e.g. a maximum number of tickets per day and may be reset daily.

If the ticket count is not exceeded, the method continues with step 52, in which the terminal asks the card for a random number. In response, the card produces in step 53 a random number (R) by means of a built-in random number generator, preferably implemented in software. The random number is transferred to the terminal.

In step 54, the terminal provides entitlement data (ED) as well as a first message authentication code (MAC1) derived from the entitlement data ED and the random numer R using the first key K1. This authentication code MAC1 is checked by the card in step 55, e.g. by also deriving MAC1 from the entitlement data ED and the random number R and comparing the received and derived authentication codes. If the code MAC1 is found to be invalid, the procedure may be terminated and an error message may be sent to the terminal. Note that the verification of the authentication code MAC1 implicitly involves the verification of the first key K1. A failed verification thus inhibits the use of the first write command (UPDATE).

If the code MAC1 is found to be valid, the entitlement data ED are stored in the card in step 56 using the first write command (UPDATE). Also, the remaining fields of the ticket (validation and verification fields) are reset using said command. An acknowledge message (ACK) is sent to the terminal. Also, proper codes (e.g. all ones) may be written into the validation and entitlement fields.

The issuance stage ends in step 57. A suitable message may be displayed on the terminal.

As shown in Fig. 6, the second or validation stage begins in step 60, in which the validation terminal is activated, e.g. by insertion of the card. The terminal sends a read command to the card. The read command may contain data specifying a certain ticket or a certain type of ticket. The card subsequently reads the specified ticket(s), or alternatively all non-empty tickets, in step 61 and sends the entitlement data ED to the terminal. In step 62 the terminal checks the entitlement data for validity (e.g. by determining the number of set bits per code word). Possibly in step 61 the validation data (VD) of the ticket were sent also. As these validation data are still "empty" (i.e. all zeros) at this stage, it follows that the ticket in question needs to be validated.

If the entitlement data ED received by the terminal in step 62 identify a ticket which is to be validated, the terminal produces in step 63 a second message authentication code MAC2 using the validation data VD and the second key K2, and sends the data VD and the code MAC2 to the card. In step 64, the card checks the received authentication code MAC2 as in step 55. If the authentication code MAC2 is found to be invalid, an error message may be sent to the terminal. If the code MAC2 is found to be valid, the validation data VD are stored in the ticket in question in step 65, using the second write command (WRITE) and an acknowledge signal is sent to the terminal. Step 66 concludes the validation stage. Note that if the validation (second) terminal does not possess the second key K2, it is not possible to use the first write command (UPDATE) at this stage.

The verification stage shown in Fig. 7 begins in step 70 when the terminal, upon being activated, produces a read command. Again, this read command (which need not be identical to the read command of step 60) may indicate a certain ticket or type of ticket. In step 71, the card reads the relevant entitlement data ED and validation data VD from memory in response to the read command and sends these data to the terminal. The terminal subsequently verifies these data in step 72, based upon verification or check data CD indicating which tickets are to be found valid (e.g. depending on the particular time and date). If the in question ticket is found valid, in step 73 a third message identification code MAC3 is produced using the verification data CD and the third key K3. These data are sent to the card and are checked in step 74. Finally, the verification data CD are stored in a verification field of the card in step 75, upon which the card sends an acknowledge message to the terminal. Step 76, in which the verification terminal may be deactivated, concludes the verification stage.

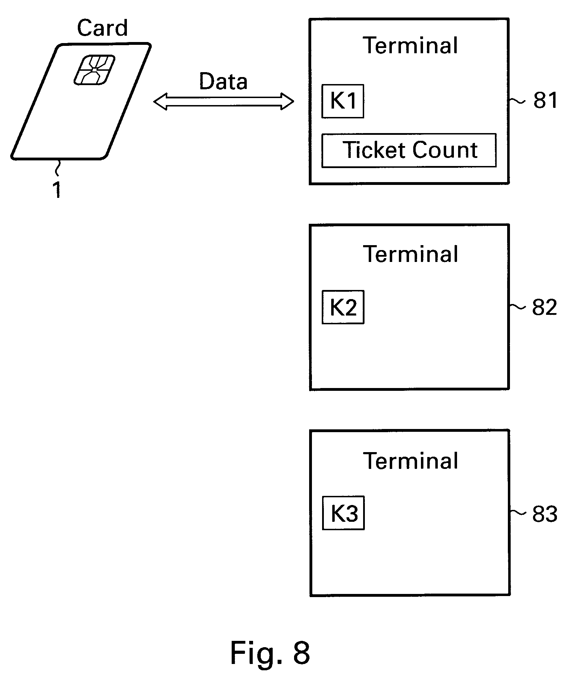

The system schematically represented in Fig. 8 comprises a first terminal 81, a second terminal 82 and a third terminal 83, as well as a smart card 1. The first terminal 81 is equipped for issuing tickets. To this end, the first key K1 is stored in the first terminal 81. The first terminal 81 also comprises a ticket counter for limiting the number of issued tickets to a predetermined amount.

The second terminal 82 is equipped for validating tickets, while the third terminal 83 is equipped for verifying tickets. The terminals 82 and 83 contain the second key K2 and the third key K3 respectively. The terminals receive input from users and/or operators.

It will be understood by those skilled in the art that the embodiments described above are given by way of example only and that many modifications and additions are possible without departing from the scope of the present invention.

## Claims

1. Smart card (1) comprising an integrated circuit (10) having a processor (11) and a memory (12), the memory being structured so as to comprise tickets (20), a ticket comprising an entitlement field (21) for storing data relating to the entitlement of the ticket, characterized in that a ticket (20) further comprises a validation field (22) for storing data relating to the validity of the ticket.

2. Smart card (1) according to claim 1, wherein a ticket (20) further comprises at least one verification field (23; 24) for storing data relating to a check of the validity of the ticket.

3. Smart card (1) according to claim 1 or 2, comprising means (11, 12) for storing data using a code containing a fixed number of set bits per group of bits.

4. Smart card (1) according to claim 3, wherein the code comprises code words (32) having eight bits, the number of set bits in each code word equalling four.

5. Smart card (1) according to claim 3 or 4, comprising a first command (UPDATE) for setting and resetting bits and a second command (WRITE) for only setting bits, the first command (UPDATE) exclusively being operational in response to an identification of a first terminal (81).

6. Smart card (1) according to any of the preceding claims, comprising a first key (K1) for authenticating entitlement data and a second key (K2) for authenticating validation data.

7. Smart card (1) according to claim 6, further comprising a third key (K3) for authenticating verification data.

8. Smart card (1) according to claims 5 and 6, wherein the identification of the first terminal (81) comprises the first key (K1).

9. Smart card (1) according to any of the preceding claims, further comprising a random number generator.

10. Method of registering tickets (20) on a smart card (1) comprising a memory (12), the method comprising the steps of:
- creating a ticket (20) in the memory (12), the ticket comprising at least one field (e.g. 21),
- issuing the ticket (20) by storing in the field (21) data identifying a right to be conveyed by the ticket,
characterized by the step of:
- validating the ticket (20) by storing in a validation field (22) data relating to the validity of the ticket.

11. Method according to claim 10, further comprising the step of:
- verifying the ticket (20) by storing in a verification field (23; 24) data relating to a verification of the ticket.

12. Method according to claim 10 or 11, wherein data in the entitlement field (21) and in the validation field (22) are stored using a code containing a fixed number of set bits per group of bits.

13. Method according to claim 12, wherein the code comprises code words (32) having eight bits, the number of set bits in each code word equalling four.

14. Method according to claim 12 or 13, wherein the step of verifying the ticket (20) comprises the checking of the number of set bits of the code.

15. Method according to any of the claims 10-14, wherein the data stored in the entitlement field (21) comprise an identification of the issuer of the ticket.

16. Method according to any of the claims 10-15, wherein the data stored in the validation field (22) comprise the date of validity of the ticket and/or a terminal identification.

17. Method according to any of the claims 10-16, wherein the data stored in the at least one verification field (23; 24) comprise a date, time and/or terminal identification.

18. Method according to any of the claims 10-17, wherein the storing of data in the validation field (22) during the issuing involves the use of a first command (UPDATE) for setting and resetting bits and a second command (WRITE) for only setting bits, the first command (UPDATE) exclusively being operational in response to an identification of a first terminal (81).

19. Method according to any of the claims 10-18, wherein the storing of data in the entitlement field (21) involves the use of a first key (K1), while the storing of data in the validation field (22) involves the use of a second key (K2).

20. Method according to claim 19, wherein the storing of data in a verification field (23; 24) involves the use of a third key (K3).

21. Method according to claim 20, wherein the second (K2) and third (K3) keys are equal.

22. System for providing access to services, the system comprising smart cards (1) and terminals (81, 82, 83), each smart card (1) being provided with a memory for storing tickets (20) comprising at least one field (e.g. 21), an issuing terminal (81) being equipped for storing in the field (21) data representing the right to access a service, characterized in that each ticket (20) comprises an entitlement field (21) and a validation field (22), a validation terminal (82) being equipped for storing in a validation field (22) data validating the respective ticket (20).

23. System according to claim 22, wherein a ticket (20) further comprises a verification field (23; 24), a verification terminal (83) being equipped for storing in a verification field (23; 24) data relating to a verification of the ticket (20).

24. System according to claim 22 or 23, wherein an issuing terminal (81) comprises a ticket counter for limiting the number of issued tickets.
